# EUROPEAN PATENT APPLICATION

(11) **EP 4 369 795 A1**
(43) Date of publication of application: **15.05.2024**
(21) Application number: 21948864.0
(22) Date of filing: 09.07.2021
(51) Int. Cl.: H04W 48/06

(54) **ADMISSION CONTROL METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Kudlek, Franz Thomas
(86) International application number: PCT/CN2021/105475
(87) International publication number: WO 2023/279370

(57) **Abstract**

An embodiment of the present disclosure provides an admission control method. The method is executed by a terminal, and comprises: sending coordinated admission control information to a first base station, wherein the coordinated admission control information is used by the first base station to determine request results of multiple admission control requests sent by at least one terminal to the first base station.

## Description

### FIELD

The present disclosure relates to, but is not limited to, the field of wireless communication technologies, and more particularly to an admission control method, an admission control apparatus, a communication device, and a storage medium.

### BACKGROUND

A multimodality involves multiple sources or forms of information. A device for collecting multimodal information may be a same terminal, or may be multiple terminals. In an application scenario, information of each modality needs to be combined and reported to a network, and information of each modality is required to arrive at the network synchronously. Otherwise, the data synchronization of each modality will be out of sync, which will bring users a bad experience.

In related technologies, a setup and a request for a single service do not take into account requests of other services and/or other terminals, which cannot satisfy application scenario requirements involving the multimodality.

### SUMMARY

Embodiments of the present disclosure disclose an admission control method, an admission control apparatus, a communication device, and a storage medium.

According to a first aspect of embodiments of the present disclosure, there is provided an admission control method. The method is performed by a terminal. The method includes sending coordinated admission control information to a first base station. The coordinated admission control information is configured for the first base station to determine request results of multiple admission control requests sent by at least one terminal to the first base station.

According to a second aspect of embodiments of the present disclosure, there is provided an admission control method. The method is performed by a first base station. The method includes receiving coordinated admission control information, and determining request results of multiple admission control requests sent by at least one terminal to the first base station according to the coordinated admission control information.

According to a third aspect of embodiments of the present disclosure, there is provided an admission control method. The method is performed by a second base station. The method includes sending coordinated admission control information to a first base station. The coordinated admission control information is configured for the first base station to determine request results of multiple admission control requests sent by at least one terminal to the first base station.

According to a fourth aspect of embodiments of the present disclosure, there is provided an admission control method. The method is performed by a core network device. The method includes sending coordinated admission control information to a first base station. The coordinated admission control information is configured for the first base station to determine request results of multiple admission control requests sent by at least one terminal to the first base station.

According to a fifth aspect of embodiments of the present disclosure, there is provided an admission control apparatus. The apparatus includes a sending module configured to send coordinated admission control information to a first base station. The coordinated admission control information is configured for the first base station to determine request results of multiple admission control requests sent by at least one terminal to the first base station.

According to a sixth aspect of embodiments of the present disclosure, there is provided an admission control apparatus. The apparatus includes a receiving module configured to receive coordinated admission control information, and a determining module configured to determine request results of multiple admission control requests sent by at least one terminal to the first base station according to the coordinated admission control information.

According to a seventh aspect of embodiments of the present disclosure, there is provided an admission control apparatus. The apparatus includes a receiving module configured to send coordinated admission control information to a first base station. The coordinated admission control information is configured for the first base station to determine request results of multiple admission control requests sent by at least one terminal to the first base station.

According to an eighth aspect of embodiments of the present disclosure, there is provided an admission control apparatus. The apparatus includes a sending module configured to send coordinated admission control information to a first base station. The coordinated admission control information is configured for the first base station to determine request results of multiple admission control requests sent by at least one terminal to the first base station.

According to a ninth aspect of embodiments of the present disclosure, there is provided a communication device. The communication device includes a processor, and a memory for storing instructions executable by the processor. The processor is configured to implement the method described in any embodiment of the present disclosure when executing the executable instructions.

According to a tenth aspect of embodiments of the present disclosure, there is provided a computer storage medium. The computer storage medium has stored therein computer-executable programs that, when executed by a processor, cause the method described in any embodiment of the present disclosure to be implemented.

In the embodiments of the present disclosure, the coordinated admission control information is sent to the first base station. The coordinated admission control information is configured for the first base station to determine the request results of the multiple admission control requests sent by the at least one terminal to the first base station. Here, after receiving the coordinated admission control information, the first base station may determine the request results of the multiple admission control requests sent by the at least one terminal to the first base station based on the coordinated admission control information. Compared with a way of merely receiving or rejecting a single admission control request, multiple admission control requests may be coordinately processed based on the coordinated admission control information sent by the terminal, thus improving the capability of synchronous processing.

### BRIEF DESCRIPTION OF THE DRAWINGS

FIG. 1 is a schematic diagram showing a wireless communication system according to an illustrative embodiment.
FIG. 2 is a schematic diagram showing a multimodal transmission according to an illustrative embodiment.
FIG. 3 is a flow chart showing an admission control method according to an illustrative embodiment.
FIG. 4 is a flow chart showing an admission control method according to an illustrative embodiment.
FIG. 5 is a flow chart showing an admission control method according to an illustrative embodiment.
FIG. 6 is a flow chart showing an admission control method according to an illustrative embodiment.
FIG. 7 is a flow chart showing an admission control method according to an illustrative embodiment.
FIG. 8 is a flow chart showing an admission control method according to an illustrative embodiment.
FIG. 9 is a flow chart showing an admission control method according to an illustrative embodiment.
FIG. 10 is a flow chart showing an admission control method according to an illustrative embodiment.
FIG. 11 is a flow chart showing an admission control method according to an illustrative embodiment.
FIG. 12 is a flow chart showing an admission control method according to an illustrative embodiment.
FIG. 13 is a flow chart showing an admission control method according to an illustrative embodiment.
FIG. 14 is a flow chart showing an admission control method according to an illustrative embodiment.
FIG. 15 is a flow chart showing an admission control method according to an illustrative embodiment.
FIG. 16 is a flow chart showing an admission control method according to an illustrative embodiment.
FIG. 17 is a flow chart showing an admission control method according to an illustrative embodiment.
FIG. 18 is a flow chart showing an admission control method according to an illustrative embodiment.
FIG. 19 is a flow chart showing an admission control method according to an illustrative embodiment.
FIG. 20 is a flow chart showing an admission control method according to an illustrative embodiment.
FIG. 21 is a flow chart showing an admission control method according to an illustrative embodiment.
FIG. 22 is a flow chart showing an admission control method according to an illustrative embodiment.
FIG. 23 is a flow chart showing an admission control method according to an illustrative embodiment.
FIG. 24 is a flow chart showing an admission control method according to an illustrative embodiment.
FIG. 25 is a flow chart showing an admission control method according to an illustrative embodiment.
FIG. 26 is a schematic diagram showing an admission control apparatus according to an illustrative embodiment.
FIG. 27 is a schematic diagram showing an admission control apparatus according to an illustrative embodiment.
FIG. 28 is a schematic diagram showing an admission control apparatus according to an illustrative embodiment.
FIG. 29 is a schematic diagram showing an admission control apparatus according to an illustrative embodiment.
FIG. 30 is a schematic diagram showing a terminal according to an illustrative embodiment.
FIG. 31 is a block diagram showing a base station according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

Terms used herein in embodiments of the present disclosure are merely for the purpose of describing specific embodiments, but should not be construed to limit the present disclosure. As used in the embodiments of the present disclosure and the appended claims, "a/an," and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are merely used for distinguishing information of the same type from each other. For example, first information may also be referred to as second information, and similarly, the second information may also be referred to as the first information, without departing from the scope of embodiments of the present disclosure. As used herein, the term "if' may be construed to mean "when" or "upon" or "in response to determining" depending on the context.

For the purpose of brevity and ease of understanding, the terms "greater than" or "less than" are used herein when characterizing the relationship of magnitude. However, for those skilled in the art, it may be understood that the term "greater than" also covers the meaning of "greater than or equal to," and the term "less than" also covers the meaning of "less than or equal to".

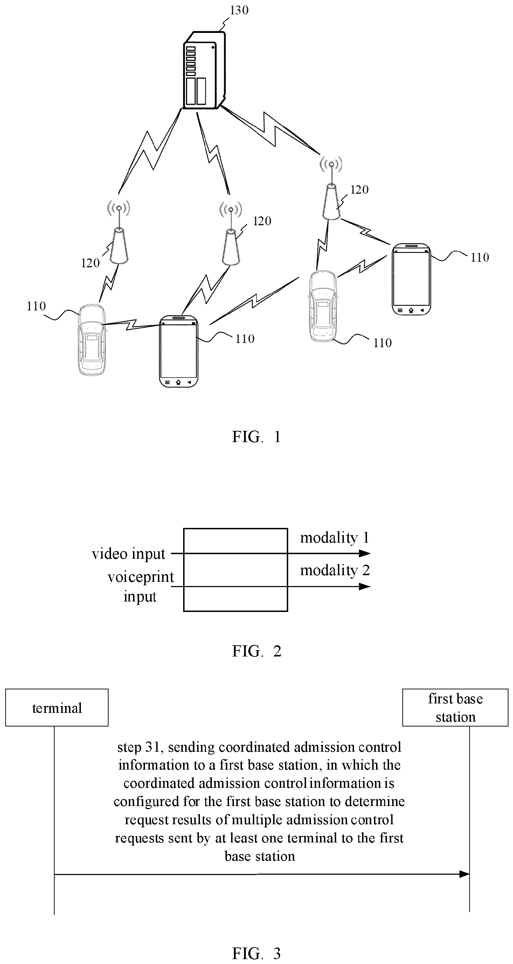

Referring to FIG. 1, FIG. 1 is a schematic diagram showing a wireless communication system provided in an embodiment of the present disclosure. As shown in FIG. 1, the wireless communication system is a communication system based on a cellular mobile communication technology, and may include several user equipments (UEs) 110 and several base stations 120.

The UE 110 may be a device that provides voice and/or data connectivity to a user. The UE 110 may communicate with one or more core networks via a radio access network (RAN). The UE 110 may be an Internet of Things user equipment, such as a sensor device, a mobile phone and a computer with an Internet of Things user equipment. For example, it may be a fixed, portable, pocket-sized, handheld, built-in computer or vehicle-mounted apparatus. For example, a station (STA), a subscriber unit, a subscriber station, a mobile station, a mobile, a remote station, an access point, a remote terminal, an access terminal, a user terminal, a user agent, a user device, or a user equipment (UE). Alternatively, the UE 110 may be a device of an unmanned aerial vehicle. Alternatively, the UE 110 may be a vehicle-mounted device, for example, a driving computer with a wireless communication function, or a wireless user equipment externally connected with a driving computer. Alternatively, the UE 110 may be a roadside device, such as a street lamp, a signal lamp or other roadside devices with a wireless communication function.

The base station 120 may be a network side device in the wireless communication system. The wireless communication system may be a 4th generation mobile communication (4G) system, also referred to as a long term evolution (LTE) system. Alternatively, the wireless communication system may be a 5G system, also referred to as a new radio (NR) system or a 5G NR system. Alternatively, the wireless communication system may be a next generation system of the 5G system. The access network in the 5G system may be referred to as a new generation-radio access network (NG-RAN).

The base station 120 may be an evolved base station (eNB) used in the 4G system. Alternatively, the base station 120 may be a centralized distributed architecture base station (gNB) used in the 5G system. When the base station 120 adopts the centralized distributed architecture, it usually includes a central unit (CU) and at least two distributed units (DUs). A protocol stack of a packet data convergence protocol (PDCP) layer, a radio link control (RLC) layer and a media access control (MAC) layer is provided in the central unit. A protocol stack of a physical (PHY) layer is provided in the distributed unit. The specific implementation of the base station 120 is not limited in the embodiments of the present disclosure.

A wireless connection may be established between the base station 120 and the UE 110 through a wireless radio. In different embodiments, the wireless radio is a wireless radio based on the 4th generation mobile communication network technology (4G) standard. Alternatively, the wireless radio is a wireless radio based on the 5th generation mobile communication network technology (5G) standard. For example, the wireless radio is a new radio. Alternatively, the wireless radio may also be a wireless radio based on the next generation mobile communication network technology standard of the 5G.

In some embodiments, an end to end (E2E) connection may also be established between the UEs 110, for example, a vehicle to vehicle (V2V) communication, a vehicle to infrastructure (V2I) communication and a vehicle to pedestrian (V2P) communication in a vehicle to everything (V2X) communication.

Here, the above-mentioned UE may be regarded as a terminal device of the following embodiments.

In some embodiments, the wireless communication system may further include a network management device 130.

Several base stations 120 are connected to the network management device 130, respectively. The network management device 130 may be a core network device in the wireless communication system, for example, the network management device 130 may be a mobility management entity (MME) in an evolved packet core (EPC). Alternatively, the network management device may be other core network devices, such as a serving gateway (SGW), a public data network gateway (PGW), a policy and charging rules function (PCRF) or a home subscriber server (HSS). The implementation form of the network management device 130 is not limited in the embodiment of the present disclosure.

In order to facilitate the understanding of those skilled in the art, embodiments of the present disclosure list multiple implementations to clearly illustrate the technical solutions of the embodiments of the present disclosure. Of course, those skilled in the art may understand that multiple embodiments provided in the embodiments of the present disclosure may be executed alone, may be executed together with the methods of other embodiments in the embodiments of the present disclosure, or may be executed alone, or may be executed together with some methods in other related technologies, which is not limited in the embodiment of the present disclosure.

In order to better understand the technical solution described in the embodiment of the present disclosure, a multimodal application scenario is described.

Multiple sources or forms of information are involved in a multimodality. For example, human's senses include touch, hearing, sight and smell, and there are different sources of information. For another example, media of information include voice, video and text, etc., and there will be different forms of information.

In an application scenario, in order to perceive user's input from multiple dimensions, there are many types and numbers of applications and/or devices used for multimodal information collection, which may include cameras, speakers, sensors, keyboards and fingerprint collectors, for example. These devices for collecting multiple modal information may be a same device, or may be multiple devices.

Referring to FIG. 2, in an application scenario, in a multimodal scenario of a single user and a single device, video information of a user may be collected by a camera on a same handheld terminal, and voiceprint information of the user may also be collected by a sensor on a mobile phone. That is, information of two modalities may be obtained at the same time. At this time, in case that the information of the two modalities is reported to a network, it needs to be reported in combination. At this time, in case that data sets of the two modalities are out of sync, it will bring users a bad experience.

In some scenarios, even content acquired by a same user on a same collection terminal generally needs strict time synchronization when performing fusion presentation.

In an embodiment, when the multimodality involves multiple inputs (here, the multiple inputs may be from one terminal or from multiple terminals), a service may be initiated by an application layer, and a decision may be made according to a situation of the multiple inputs. At this time, there will be a problem. In case that several services in multiple services fail to establish a successful connection, the application layer will discard data that has been received. This processing way will not have much influence on an existing wired network or wireless fidelity (WIFI) technology. However, in case that it occurs in a mobile network, it will lead to a huge waste of wireless resources. Since the wireless resources are very precious, there is a need to try to avoid a situation that data packets are transmitted to the application layer and then discarded. Therefore, it is necessary to perform coordinated processing when a certain service is accessed at an access stratum, so as to avoid a situation that only part of service setup is completed in multiple service setup requests.

In related technologies, a setup and a request for services do not take into account requests of other services or even other terminals, which is obviously insufficient to support this demand, so certain optimization processing is needed.

As shown in FIG. 3, an admission control method is provided in an embodiment of the present disclosure. The method is performed by a terminal. The method includes a step as follows.

In step 31, coordinated admission control information is sent to a first base station.

The coordinated admission control information is configured for the first base station to determine request results of multiple admission control requests sent by at least one terminal to the first base station.

Here, the terminal may be, but is not limited to, a mobile phone, a tablet computer, a wearable device, a vehicle-mounted terminal, a road side unit (RSU), a smart home terminal, an industrial sensing device, and/or a medical device. For example, the smart home terminal may include a camera, a temperature collection device, a brightness collection device, and the like.

Here, the base station (for example, the first base station) involved in the present disclosure may be various types of base stations, for example, a base station of a third generation mobile communication (3G) network, a base station of a fourth generation mobile communication (4G) network, a base station of a fifth generation mobile communication (5G) network, or other evolved base stations.

In an embodiment, the terminal may send the admission control request to the first base station. The coordinated admission control information is carried in the admission control request. The coordinated admission control information is configured for the first base station to determine the request results of the multiple admission control requests sent by the at least one terminal to the first base station.

In an embodiment, the terminal is a first terminal. The first terminal may send the admission control request to the first base station. The coordinated admission control information is carried in the admission control request. The coordinated admission control information is configured for the first base station to determine the request results of the multiple admission control requests sent by the at least one terminal to the first base station. Here, the at least one terminal includes the first terminal. The multiple admission control requests include admission control requests sent by the first terminal to the first base station.

In an embodiment, the terminal may send the admission control request to the first base station for different services. For example, the first terminal sends an admission control request to the first base station for a video service. A second terminal sends an admission control request to the first base station for an audio service.

In an embodiment, the request result of the admission control request includes a request result of rejecting the admission control request, and a request result of accepting the admission control request. For example, after receiving the admission control request sent by the terminal, the first base station may accept the admission control request. Alternatively, after receiving the admission control request sent by the terminal, the first base station may reject the admission control request. In an embodiment, in response to the first base station rejecting the admission control request, the first base station sends a response message to the terminal sending the admission control request. Here, the response message is configured to indicate that the terminal sending the admission control request cannot send a response message of the admission control request to the first base station within a set time period. Here, the set time period may be configured by the first base station. For example, information of the set time period is carried in the response message sent by the first base station for the admission control request of the terminal. Here, the response message is configured to notify the terminal that the first terminal rejects the admission control request sent by the terminal.

In an embodiment, the coordinated admission control information includes group information, for example, a group identifier. Here, the group information is configured to indicate a group to which the terminal sending the coordinated admission control information belongs. Each group includes at least one terminal. The group to which the terminal belongs may be determined based on the group identifier. In an embodiment, the first base station receives multiple admission control requests sent by at least one terminal in a group indicated by the group identifier. In response to the first base station rejecting one of the multiple admission control requests, all of the multiple admission control requests will be rejected. Alternatively, in response to the first base station accepting one of the multiple admission control requests, all of the multiple admission control requests will be accepted. Here, terminals included in a group may be predetermined. Here, the terminal within the group may be a terminal that acquires multimode information. For example, a group includes a first terminal and a second terminal. The first terminal is a terminal that acquires video information in the multimode information. The second terminal is a terminal that acquires audio information in the multimode information.

In an embodiment, the coordinated admission control information includes information of a group to which a service belongs, for example, a group identifier. Here, the information of the group to which the service belongs is configured to indicate a group to which the service belongs, and each group to which a service belongs includes at least one service. The group to which the service belongs may be determined based on the group identifier. The first base station receives multiple admission control requests corresponding to a service in a group indicated by the group identifier. In response to the first base station rejecting one of the multiple admission control requests, all of the multiple admission control requests will be rejected. Alternatively, in response to the first base station accepting one of the multiple admission control requests, all of the multiple admission control requests will be accepted. Here, services included in the group may be predetermined. The services included in the group may be video services and voice services, etc. Here, it is to be noted that multiple services may be initiated by a same terminal, or initiated by multiple terminals respectively.

In an embodiment, the group identifier may implicitly indicate an association relationship (or a backup relationship, or a group relationship) between the terminal and other terminals. In this way, it may be determined according to the group identifier that the terminal and other terminals belong to a same group. That is, after obtaining the group identifier, a terminal included in a group indicated by the group identifier may be determined. For example, a terminal A may declare an association relationship with a terminal B and a terminal C through a group identifier x. After obtaining the group identifier x, it may be determined that a group indicated by the group identifier x includes the terminal A, the terminal B and the terminal C.

In an embodiment, the coordinated admission control information includes demand indication information configured to indicate that the terminal has a demand for a coordinated admission control or the terminal does not have a demand for a coordinated admission control. Here, in case that the coordinated admission control information indicates that the terminal has the demand for the coordinated admission control, the first base station determines the request results of the multiple admission control requests sent by the at least one terminal to the first base station based on the coordinated admission control information. Alternatively, in case that the coordinated admission control information indicates that the terminal does not have the demand for the coordinated admission control, the first base station will not determine the request results of the multiple admission control requests sent by the at least one terminal to the first base station based on the coordinated admission control information. At this time, the first base station merely needs to determine request results for a single admission control request. That is, the single admission control request may be received or rejected without considering admission control requests of other services or other terminals.

In an embodiment, the request result may be to reject all the admission control requests or accept all the admission control requests. The coordinated admission control information may include behavior indication information for determining the request result. In an embodiment, the behavior indication information may be information configured to indicate that the first base station will reject multiple admission control requests as long as it rejects one admission control request. Alternatively, the behavior information may be information configured to indicate that multiple admission control requests will be accepted as long as one admission control request is accepted.

In an embodiment, a radio resource control (RRC) connection request message or an RRC resume request message indicating the coordinated admission control information may be sent to the first base station.

In an embodiment, a third random access message (Msg3) indicating the coordinated admission control information may be sent to the first base station. Here, the coordinated admission control information may be carried in a predetermined information field of the third random access message. Alternatively, the third random access message may be redefined, and a newly added information field is set in the random access message. The coordinated admission control information may be carried in the newly added information field.

In an embodiment, a common control channel (CCCH) message indicating the coordinated admission control information may be sent to the first base station. Here, the coordinated admission control information may be indicated by using a logical channel identifier of the common control channel. Here, the first base station may send a mapping relationship between the logical channel identifier of the common control channel and a group indicated by the coordinated admission control information to the terminal in advance. For example, the mapping relationship may be as follows:

**Table 1**

| | Identifier of common control channel | Group index |
|---|---|---|
| Relationship 1 | 1234 | 0 |
| Relationship 2 | 1235 | 1 |

In an embodiment, a RACH request indicating the coordinated admission control information may be sent to the first base station. Here, groups of different terminals may be distinguished by the division of time-frequency code domain resources accessed by different random access channels (RACHs). At this time, the base station needs to notify the terminal of the division of time-frequency code domain resources accessed by the different RACHs and a correspondence between the groups of the different terminal. When the RACH request of the terminal is received, a group in which the terminal is located may be determined based on the time-frequency code domain resources indicated by the RACH. It is to be noted that time-frequency code domain resources include one or more of a time domain resource, a frequency domain resource, and a code domain resource.

In an embodiment, after the admission control request message sent by the terminal to the first base station is rejected, an RRC rejection response message sent by the first base station is received. Waiting timer information indicated by the RRC rejection response message is configured according to the coordinated admission control information. Here, the waiting timer information may include time period information for prohibiting the terminal from continuously sending the admission control request message to the first base station. For example, in case that the time period information indicates 1 minute, the terminal is forbidden from sending the admission control request message to the first base station within 1 minute after receiving the RRC rejection response message. Here, in response to admission control request messages sent by at least one terminal in a group being rejected, waiting timer information of terminals in a same group may be the same.

In an embodiment, before sending the coordinated admission control information to the first base station, the coordinated admission control information sent by a core network device or the first base station may be received. In an embodiment, an attach procedure message indicating the coordinated admission control information sent by a core network device is received. Alternatively, a broadcast signaling indicating the coordinated admission control information sent by the first base station is received. Alternatively, a dedicated signaling indicating the coordinated admission control information sent by the first base station is received.

In an embodiment, before sending the coordinated admission control information to the first base station, capability information sent by the first base station is received. The capability information is configured to indicate whether the first base station supports to determine the request result by using the coordinated admission control information. In an embodiment, in case that the first base station does not support to determine the request result by using the coordinated admission control information, the coordinated admission control information may not be sent to the first base station. That is, the coordinated admission control information may not be sent through the RRC connection request message or the resume request message.

In the embodiment of the present disclosure, the coordinated admission control information is sent to the first base station. The coordinated admission control information is configured for the first base station to determine the request results of the multiple admission control requests sent by the at least one terminal to the first base station. Here, after receiving the coordinated admission control information, the first base station may determine the request results of the multiple admission control requests sent by the at least one terminal to the first base station based on the coordinated admission control information. Compared with a way of merely receiving or rejecting a single admission control request, the multiple admission control requests may be coordinately processed based on the coordinated admission control information sent by the terminal, thus improving the capability of synchronous processing.

It is to be noted that, those skilled in the art may understand that the method provided in the embodiments of the present disclosure may be executed alone, or may be executed together with some methods in the embodiments of the present disclosure or some methods in related technologies.

In an embodiment, the coordinated admission control information is configured for the first base station to determine the request results of the multiple admission control requests sent by the at least one terminal in the group to the first base station.

Here, the at least one terminal is included in the group. The at least one terminal is configured for collecting multimodal information. For example, the group includes a first terminal, a second terminal, and a third terminal. The first terminal is configured to collect video information, the second terminal is configured to collect audio information, and the third terminal is configured to collect fingerprint information. Here, the group may be indicated by a group identifier, and the terminal may determine the group to which the terminal belongs according to the group identifier.

In an embodiment, the coordinated admission control information includes group information, for example, a group identifier. Here, the group information is configured to indicate a group to which the terminal sending the coordinated admission control information belongs. Each group includes at least one terminal. The group to which the terminal belongs may be determined based on the group identifier. In an embodiment, the first base station receives multiple admission control requests sent by at least one terminal in a group indicated by the group identifier. In response to the first base station rejecting one of the multiple admission control requests, all of the multiple admission control requests will be rejected. Alternatively, in response to the first base station accepting one of the multiple admission control requests, all of the multiple admission control requests will be accepted. Here, terminals included in a group may be predetermined. Here, the terminal within the group may be a terminal that acquires the multimode information.

In an embodiment, a group identifier is configured to indicate a group to which the terminal belongs or a group to which a service of the terminal belongs. Demand indication information is configured to indicate that the terminal has a demand for a coordinated admission control or the terminal does not have a demand for a coordinated admission control. Behavior indication information is configured to indicate a way for the first base station to coordinately determine a request result based on a result of at least one admission control request when the terminal has a demand for the coordinated admission control.

Here, the group identifier may be configured to indicate the group to which the terminal sending the coordinated admission control information belongs. The group identifier may also be configured to indicate the group to which the service of the terminal sending the coordinated admission control belongs.

In an embodiment, an information field is configured to indicate the demand indication information. For example, when a value of the information field is "1," it indicates that the terminal has the demand for the coordinated admission control. Alternatively, when a value of the information field is "0," it indicates that the terminal does not have the demand for the coordinated admission control.

In an embodiment, the demand indication information may be carried in an implicit indication manner. For example, when the coordinated admission control information carries the group identifier, the demand indication information indicates that the terminal has the demand for the coordinated admission control. Alternatively, when the coordinated admission control information does not carry the group identifier, the demand indication information indicates that the terminal does not have the demand for the coordinated admission control.

In an embodiment, in response to the terminal having the demand for the coordinated admission control, when one of the multiple admission control requests is rejected, the multiple admission control requests are rejected. Alternatively, when one of the multiple admission control requests is accepted, the multiple admission control requests are accepted. Here, it is to be noted that the terminals sending the admission control requests belong to one group, or the services of the multiple admission control requests belong to one group.

It is to be noted that, it may also be determined to receive the multiple admission control requests simultaneously or to reject the multiple admission control requests based on a predetermined protocol.

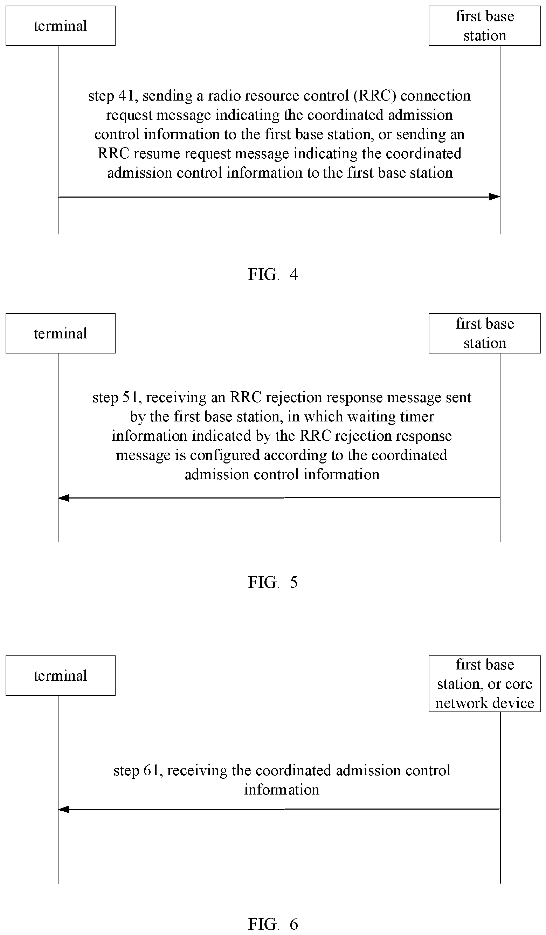

As shown in FIG. 4, an admission control method is provided in an embodiment of the present disclosure. The method is performed by a terminal. The method includes a step as follows.

In step 41, a radio resource control (RRC) connection request message indicating the coordinated admission control information is sent to the first base station, or an RRC resume request message indicating the coordinated admission control information is sent to the first base station.

In an embodiment, a third random access message (Msg3) indicating the coordinated admission control information may be sent to the first base station. Here, the coordinated admission control information may be carried in a predetermined information field of the third random access message. Alternatively, the third random access message may be redefined. A newly added information field is set in the random access message. The coordinated admission control information is carried in the newly added information field.

In an embodiment, a common control channel (CCCH) message indicating the coordinated admission control information may be sent to the first base station. Here, the coordinated admission control information may be indicated by using a logical channel identifier of the common control channel. Here, the first base station may send a mapping relationship between the logical channel identifier of the common control channel and the group indicated by the coordinated admission control information to the terminal in advance.

It is to be noted that, those skilled in the art may understand that the methods provided in the embodiments of the present disclosure may be executed alone, or may be executed together with some methods in the embodiments of the present disclosure or some methods in related technologies.

As shown in FIG. 5, an admission control method is provided in an embodiment of the present disclosure. The method is performed by a terminal. The method includes a step as follows.

In step 51, an RRC rejection response message sent by the first base station is received.

Waiting timer information indicated by the RRC rejection response message is configured according to the coordinated admission control information.

In an embodiment, the request result of the admission control request includes a request result of rejecting the admission control request, and a request result of accepting the admission control request. For example, after receiving the admission control request sent by the terminal, the first base station may accept the admission control request. Alternatively, after receiving the admission control request sent by the terminal, the first base station may reject the admission control request. In an embodiment, in response to the first base station rejecting the admission control request, the first base station sends an RRC rejection response message to the terminal sending the admission control request. Here, the RRC rejection response message is configured to indicate that the terminal sending the admission control request cannot send a response message of the admission control request to the first base station within a set time period. Here, the waiting timer information includes set time period information.

Here, the set time period may be configured by the first base station. For example, information of the set time period is carried in the RRC rejection response message sent by the first base station for the admission control request of the terminal. Here the RRC rejection response message is configured to notify the terminal that the first terminal rejects the admission control request sent by the terminal. In an embodiment, the set time period may be configured according to the coordinated admission control information. For example, in case that the coordinated admission control information indicates the group to which the terminal belongs, after the first base station rejects all the terminals in the group, the set time period in the RRC rejection response message sent to all the terminals may be set to a same time period, thus improving the capability of coordinated processing.

In an embodiment, the waiting timer information of the terminals in a same group is the same. Here, the waiting timer timer information includes the set time period information.

It is to be noted that, those skilled in the art may understand that the methods provided in the embodiments of the present disclosure may be executed alone, or may be executed together with some methods in the embodiments of the present disclosure or some methods in related technologies.

As shown in FIG. 6, an admission control method is provided in an embodiment of the present disclosure. The method is performed by a terminal. The method includes a step as follows.

In step 61, the coordinated admission control information is received.

Here, coordinated admission control information sent by the first base station or a core network may be received before the coordinated admission control information is sent to the first base station. In this way, the terminal may determine the coordinated admission control information that needs to be sent to the first base station.

In an embodiment, the terminal may obtain information of the group to which the terminal belongs when performing an attach procedure. In this way, when sending the coordinated admission control information, information of the group of the terminal may be sent to the first base station.

In an embodiment, a non-access stratum of the terminal may notify an access stratum of information to which the terminal belongs through an inter-stratum message to perform a service setup request.

In an embodiment, the first base station may send the coordinated admission control information to the terminal through a broadcast signaling or a dedicated signaling. Here, the coordinated admission control information may be sent to the terminal through an RRC reconfiguration message or an RRC release message.

It is to be noted that, those skilled in the art may understand that the methods provided in the embodiments of the present disclosure may be executed alone, or may be executed together with some methods in the embodiments of the present disclosure or some methods in related technologies.

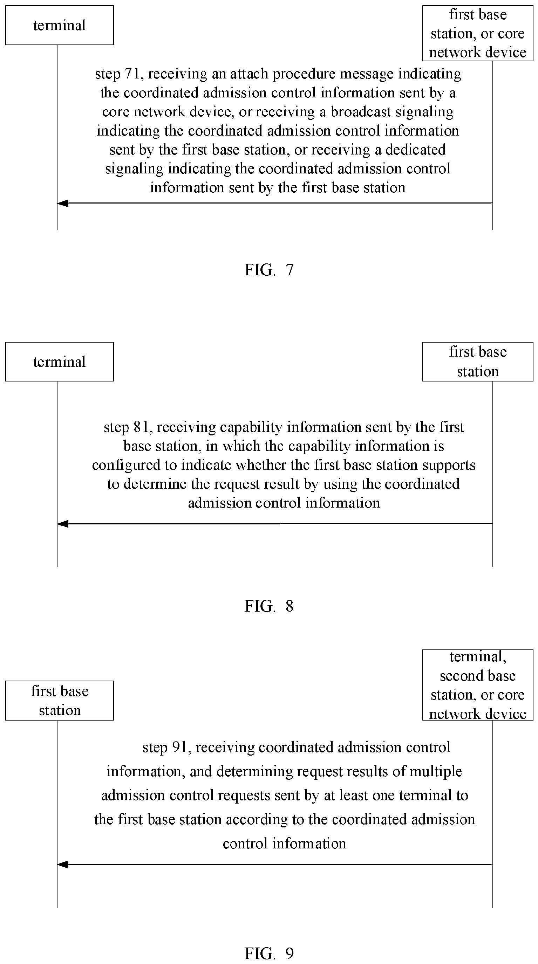

As shown in FIG. 7, an admission control method is provided in an embodiment of the present disclosure. The method is performed by a terminal. The method includes a step as follows.

In step 71, an attach procedure message indicating the coordinated admission control information sent by a core network device is received, or a broadcast signaling indicating the coordinated admission control information sent by the first base station is received, or a dedicated signaling indicating the coordinated admission control information sent by the first base station is received.

Here, the coordinated admission control information may be sent to the terminal through an RRC reconfiguration message or an RRC release message.

It is to be noted that, those skilled in the art may understand that the methods provided in the embodiments of the present disclosure may be executed alone, or may be executed together with some methods in the embodiments of the present disclosure or some methods in related technologies.

As shown in FIG. 8, an admission control method is provided in an embodiment of the present disclosure. The method is performed by a terminal. The method includes a step as follows.

In step 81, capability information sent by the first base station is received.

The capability information is configured to indicate whether the first base station supports to determine the request result by using the coordinated admission control information.

In an embodiment, before sending the coordinated admission control information to the first base station, the capability information sent by the first base station is received. The capability information is configured to indicate whether the first base station supports to determine the request result by using the coordinated admission control information.

In an embodiment, in response to the first base station not supporting to determine the request result by using the coordinated admission control information, the coordinated admission control information may not be sent to the first base station. That is, the coordinated admission control information may not be sent through the RRC connection request message or the resume request message. In response to the first base station supporting to determine the request result by using the coordinated admission control information, the terminal sends the coordinated admission control information to the first base station.

It is to be noted that, those skilled in the art may understand that the methods provided in the embodiments of the present disclosure may be executed alone, or may be executed together with some methods in the embodiments of the present disclosure or some methods in related technologies.

As shown in FIG. 9, an admission control method is provided in an embodiment of the present disclosure. The method is performed by a first base station. The method includes a step as follows.

In step 91, coordinated admission control information is received.

According to the coordinated admission control information, request results of multiple admission control requests sent by at least one terminal to the first base station are determined.

Here, the terminal may be, but is not limited to, a mobile phone, a tablet computer, a wearable device, a vehicle-mounted terminal, a road side unit (RSU), a smart home terminal, an industrial sensing device, and/or a medical device. For example, the smart home terminal may include a camera, a temperature collection device, a brightness collection device, and the like.

Here, the base station (for example, the first base station) involved in the present disclosure may be various types of base stations, for example, a base station of a third generation mobile communication (3G) network, a base station of a fourth generation mobile communication (4G) network, a base station of a fifth generation mobile communication (5G) network, or other evolved base stations.

It is to be noted that, in addition to receiving the coordinated admission control information from the terminal, the first base station may also receive coordinated admission control information from a core network device.

In an embodiment, the terminal may send the admission control request to the first base station. The coordinated admission control information is carried in the admission control request. The coordinated admission control information is configured for the first base station to determine the request results of the multiple admission control requests sent by the at least one terminal to the first base station.

In an embodiment, the terminal is a first terminal. The first terminal may send the admission control request to the first base station. The coordinated admission control information is carried in the admission control request. The coordinated admission control information is configured for the first base station to determine the request results of the multiple admission control requests sent by the at least one terminal to the first base station. Here, the at least one terminal includes the first terminal. The multiple admission control requests include admission control requests sent by the first terminal to the first base station.

In an embodiment, the first base station may receive the admission control request sent to the first base station for different services. For example, the first base station receive the admission control request sent to the first base station for a video service. The first base station receive the admission control request sent to the first base station for an audio service.

In an embodiment, the request result of the admission control request includes a request result of rejecting the admission control request, and a request result of accepting the admission control request. For example, after receiving the admission control request, the first base station may accept the admission control request. Alternatively, after receiving the admission control request, the first base station may reject the admission control request. In an embodiment, in response to the first base station rejecting the admission control request, the first base station sends a response message to the terminal sending the admission control request. Here, the response message is configured to indicate that the terminal sending the admission control request cannot send a response message of the admission control request to the first base station within a set time period. Here, the set time period may be configured by the first base station. For example, information of the set time period is carried in the response message sent by the first base station for the admission control request of the terminal. Here, the response message is configured to notify the terminal that the first terminal rejects the admission control request sent by the terminal.

In an embodiment, the coordinated admission control information includes group information, for example, a group identifier. Here, the group information is configured to indicate a group to which the terminal sending the coordinated admission control information belongs. Each group includes at least one terminal. The group to which the terminal belongs may be determined based on the group identifier. In an embodiment, the first base station receives multiple admission control requests sent by at least one terminal in a group indicated by the group identifier. In response to the first base station rejecting one of the multiple admission control requests, all of the multiple admission control requests will be rejected. Alternatively, in response to the first base station accepting one of the multiple admission control requests, all of the multiple admission control requests will be accepted. Here, terminals included in a group may be predetermined. Here, the terminal within the group may be a terminal that acquires multimode information. For example, a group includes a first terminal and a second terminal. The first terminal is a terminal that acquires video information in the multimode information. The second terminal is a terminal that acquires audio information in the multimode information.

In an embodiment, the coordinated admission control information includes information of a group to which a service belongs, for example, a group identifier. Here, the information of the group to which the service belongs is configured to indicate a group to which the service belongs, and each group to which a service belongs includes at least one service. The group to which the service belongs may be determined based on the group identifier. The first base station receives multiple admission control requests corresponding to a service in a group indicated by the group identifier. In response to the first base station rejecting one of the multiple admission control requests, all of the multiple admission control requests will be rejected. Alternatively, in response to the first base station accepting one of the multiple admission control requests, all of the multiple admission control requests will be accepted. Here, services included in the group may be predetermined. The services included in the group may be video services and voice services, etc. Here, it is to be noted that multiple services may be initiated by a same terminal, or initiated by multiple terminals respectively.

In an embodiment, the coordinated admission control information includes demand indication information configured to indicate that the terminal has a demand for a coordinated admission control or the terminal does not have a demand for a coordinated admission control. Here, in case that the coordinated admission control information indicates that the terminal has the demand for the coordinated admission control, the first base station determines the request results of the multiple admission control requests sent by the at least one terminal to the first base station based on the coordinated admission control information. Alternatively, in case that the coordinated admission control information indicates that the terminal does not have the demand for the coordinated admission control, the first base station will not determine the request results of the multiple admission control requests sent by the at least one terminal to the first base station based on the coordinated admission control information. At this time, the first base station merely needs to determine request results for a single admission control request. That is, the single admission control request may be received or rejected without considering admission control requests of other services or other terminals.

In an embodiment, the request result may be to reject all the admission control requests or accept all the admission control requests. The coordinated admission control information may include behavior indication information for determining the request result. In an embodiment, the behavior indication information may be information configured to indicate that the first base station will reject multiple admission control requests as long as it rejects one admission control request. Alternatively, the behavior information may be information configured to indicate that multiple admission control requests will be accepted as long as one admission control request is accepted.

In an embodiment, a radio resource control (RRC) connection request message or an RRC resume request message indicating the coordinated admission control information may be sent to the first base station.

In an embodiment, a third random access message (Msg3) indicating the coordinated admission control information may be sent to the first base station. Here, the coordinated admission control information may be carried in a predetermined information field of the third random access message. Alternatively, the third random access message may be redefined, and a newly added information field is set in the random access message. The coordinated admission control information may be carried in the newly added information field.

In an embodiment, a common control channel (CCCH) message indicating the coordinated admission control information may be sent to the first base station. Here, the coordinated admission control information may be indicated by using a logical channel identifier of the common control channel. Here, the first base station may send a mapping relationship between the logical channel identifier of the common control channel and a group indicated by the coordinated admission control information to the terminal in advance. For example, the mapping relationship may be seen in Table 1.

In an embodiment, after the admission control request message sent by the terminal to the first base station is rejected, an RRC rejection response message sent by the first base station is received. Waiting timer information indicated by the RRC rejection response message is configured according to the coordinated admission control information. Here, the waiting timer information may include time period information for prohibiting the terminal from continuously sending the admission control request message to the first base station. For example, in case that the time period information indicates 1 minute, the terminal is forbidden from sending an admission control request to the first base station within 1 minute after receiving the RRC rejection response message. Here, in response to admission control request messages sent by at least one terminal in a group being rejected, waiting timer information of terminals in a same group may be the same.

In an embodiment, the coordinated admission control information is configured for the first base station to determine the request results of the multiple admission control requests sent by the at least one terminal in the group to the first base station.

Here, the at least one terminal is included in the group. The at least one terminal is configured for collecting multimodal information. For example, the group includes a first terminal, a second terminal, and a third terminal. The first terminal is configured to collect video information, the second terminal is configured to collect audio information, and the third terminal is configured to collect fingerprint information. Here, the group may be indicated by a group identifier, and the terminal may determine the group to which the terminal belongs according to the group identifier.

In an embodiment, the coordinated admission control information includes group information, for example, a group identifier. Here, the group information is configured to indicate a group to which the terminal sending the coordinated admission control information belongs. Each group includes at least one terminal. The group to which the terminal belongs may be determined based on the group identifier. In an embodiment, the first base station receives multiple admission control requests sent by at least one terminal in a group indicated by the group identifier. In response to the first base station rejecting one of the multiple admission control requests, all of the multiple admission control requests will be rejected. Alternatively, in response to the first base station accepting one of the multiple admission control requests, all of the multiple admission control requests will be accepted. Here, terminals included in a group may be predetermined. Here, the terminal within the group may be a terminal that acquires the multimode information.

In an embodiment, a group identifier is configured to indicate a group to which the terminal belongs or a group to which a service of the terminal belongs. Demand indication information is configured to indicate that the terminal has a demand for a coordinated admission control or the terminal does not have a demand for a coordinated admission control. Behavior indication information is configured to indicate a way for the first base station to coordinately determine a request result based on a result of at least one admission control request when the terminal has a demand for the coordinated admission control.

Here, the group identifier may be configured to indicate the group to which the terminal sending the coordinated admission control information belongs. The group identifier may also be configured to indicate the group to which the service of the terminal sending the coordinated admission control belongs.

In an embodiment, an information field is configured to indicate the demand indication information. For example, when a value of the information field is "1," it indicates that the terminal has the demand for the coordinated admission control. Alternatively, when a value of the information field is "0," it indicates that the terminal does not have the demand for the coordinated admission control.

In an embodiment, the demand indication information may be carried in an implicit indication manner. For example, when the coordinated admission control information carries the group identifier, the demand indication information indicates that the terminal has the demand for the coordinated admission control. Alternatively, when the coordinated admission control information does not carry the group identifier, the demand indication information indicates that the terminal does not have the demand for the coordinated admission control.

In an embodiment, in response to the terminal having the demand for the coordinated admission control, when one of the multiple admission control requests is rejected, the multiple admission control requests are rejected. Alternatively, when one of the multiple admission control requests is accepted, the multiple admission control requests are accepted. Here, it is to be noted that the terminals sending the admission control requests belong to one group, or the services of the multiple admission control requests belong to one group.

It is to be noted that, it may also be determined to receive the multiple admission control requests simultaneously or to reject the multiple admission control requests based on a predetermined protocol.

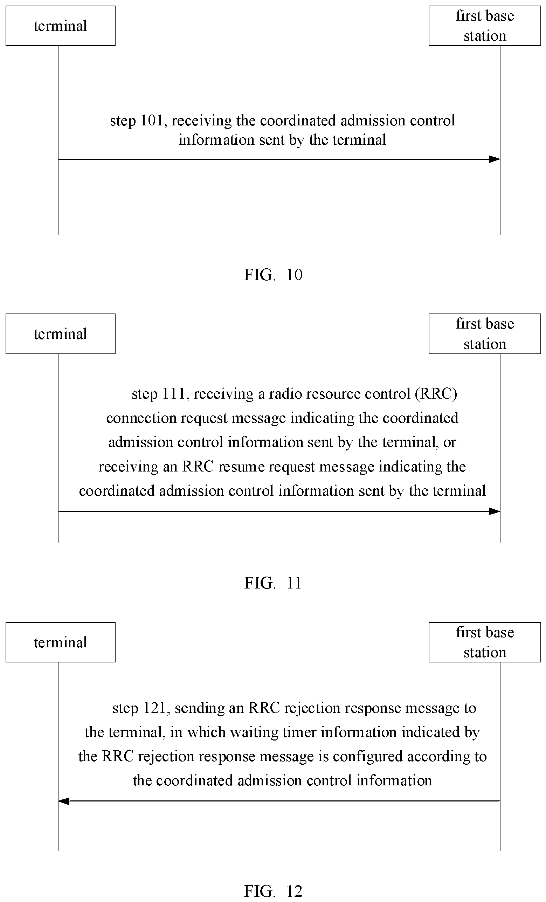

As shown in FIG. 10, an admission control method is provided in an embodiment of the present disclosure. The method is performed by a first base station. The method includes a step as follows.

In step 101, the coordinated admission control information sent by the terminal is received.

In an embodiment, the terminal may send the admission control request to the first base station. The coordinated admission control information is carried in the admission control request. The coordinated admission control information is configured for the first base station to determine the request results of the multiple admission control requests sent by the at least one terminal to the first base station.

In an embodiment, the terminal is a first terminal. The first terminal may send the admission control request to the first base station. The coordinated admission control information is carried in the admission control request. The coordinated admission control information is configured for the first base station to determine the request results of the multiple admission control requests sent by the at least one terminal to the first base station. Here, the at least one terminal includes the first terminal. The multiple admission control requests include admission control requests sent by the first terminal to the first base station.

It is to be noted that, those skilled in the art may understand that the methods provided in the embodiments of the present disclosure may be executed alone, or may be executed together with some methods in the embodiments of the present disclosure or some methods in related technologies.

As shown in FIG. 11, an admission control method is provided in an embodiment of the present disclosure. The method is performed by a first base station. The method includes a step as follows.

In step 111, a radio resource control (RRC) connection request message indicating the coordinated admission control information sent by the terminal is received, or an RRC resume request message indicating the coordinated admission control information sent by the terminal is received.

In an embodiment, a radio resource control (RRC) connection request message or an RRC resume request message indicating the coordinated admission control information sent by the terminal may be received.

In an embodiment, third random access message (Msg3) indicating the coordinated admission control information sent by the terminal may be received. Here, the coordinated admission control information may be carried in a predetermined information field of the third random access message. Alternatively, the third random access message may be redefined, and a newly added information field is set in the random access message. The coordinated admission control information may be carried in the newly added information field.

In an embodiment, a common control channel (CCCH) message indicating the coordinated admission control information sent by the terminal may be received. Here, the coordinated admission control information may be indicated by using a logical channel identifier of the common control channel. Here, the first base station may send a mapping relationship between the logical channel identifier of the common control channel and a group indicated by the coordinated admission control information to the terminal in advance. For example, the mapping relationship may be seen in Table 1.

It is to be noted that, those skilled in the art may understand that the methods provided in the embodiments of the present disclosure may be executed alone, or may be executed together with some methods in the embodiments of the present disclosure or some methods in related technologies.

As shown in FIG. 12, an admission control method is provided in an embodiment of the present disclosure. The method is performed by a first base station. The method includes a step as follows.

In step 121, a radio resource control (RRC) rejection response message is sent to the terminal.

Waiting timer information indicated by the RRC rejection response message is configured according to the coordinated admission control information.

In an embodiment, the request result of the admission control request includes a request result of rejecting the admission control request, and a request result of accepting the admission control request. For example, after receiving the admission control request sent by the terminal, the first base station may accept the admission control request. Alternatively, after receiving the admission control request sent by the terminal, the first base station may reject the admission control request. In an embodiment, in response to the first base station rejecting the admission control request, the first base station sends an RRC rejection response message to the terminal sending the admission control request. Here, the RRC rejection response message is configured to indicate that the terminal sending the admission control request cannot send a response message of the admission control request to the first base station within a set time period. Here, the waiting timer information includes set time period information.

Here, the set time period may be configured by the first base station. For example, information of the set time period is carried in the RRC rejection response message sent by the first base station for the admission control request of the terminal. Here the RRC rejection response message is configured to notify the terminal that the first terminal rejects the admission control request sent by the terminal. In an embodiment, the set time period may be configured according to the coordinated admission control information. For example, in case that the coordinated admission control information indicates the group to which the terminal belongs, after the first base station rejects all the terminals in the group, the set time period in the RRC rejection response message sent to all the terminals may be set to a same time period, thus improving the capability of coordinated processing.

In an embodiment, the waiting timer information of the terminals in a same group is the same. Here, the waiting timer timer information includes the set time period information.

It is to be noted that, those skilled in the art may understand that the methods provided in the embodiments of the present disclosure may be executed alone, or may be executed together with some methods in the embodiments of the present disclosure or some methods in related technologies.

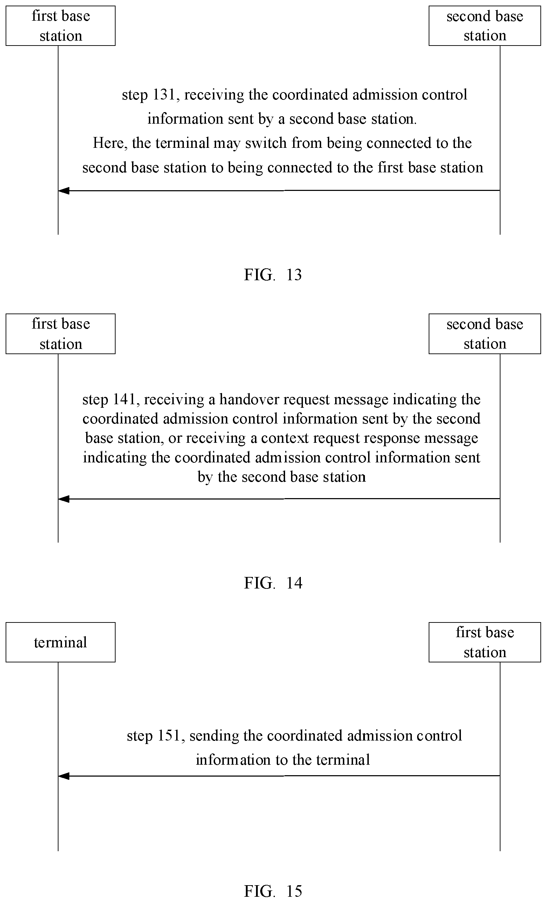

As shown in FIG. 13, an admission control method is provided in an embodiment of the present disclosure. The method is performed by a first base station. The method includes a step as follows.

In step 131, the coordinated admission control information sent by a second base station is received.

Here, the terminal may switch from being connected to the second base station to being connected to the first base station.

In an embodiment, a handover request message indicating the coordinated admission control information sent by the second base station may be received. Alternatively, a context request response message indicating the coordinated admission control information sent by the second base station is received.

In an embodiment, the coordinated admission control information is carried in a packet data network (PDN) session setup information unit of the handover request message. Here, the coordinated admission control information may indicate a group to which the terminal belongs.

In an embodiment, the coordinated admission control information is carried in a quality of service (QoS) flow setup information unit of the handover request message. Here, the coordinated admission control information may indicate a group to which the terminal belongs.

In an embodiment, network congestion information may be carried in the response message sent by the first base station to the second base station, for example, time information, so that the network congestion information may be used as a reference for initiating a handover request next time.

In an embodiment, the coordinated admission control information is carried in a PDN session setup information unit of a response (retrieve UE context response) message for acquiring terminal context information. Here, the coordinated admission control information may indicate a group to which the terminal belongs.

In an embodiment, the coordinated admission control information is carried in a QoS flow setup information unit of the response message for acquiring terminal context information. Here, the coordinated admission control information may indicate a group to which the terminal belongs.

It is to be noted that, those skilled in the art may understand that the methods provided in the embodiments of the present disclosure may be executed alone, or may be executed together with some methods in the embodiments of the present disclosure or some methods in related technologies.

As shown in FIG. 14, an admission control method is provided in an embodiment of the present disclosure. The method is performed by a first base station. The method includes a step as follows.

In step 141, a handover request message indicating the coordinated admission control information sent by the second base station is received, or a context request response message indicating the coordinated admission control information sent by the second base station is received.

It is to be noted that, those skilled in the art may understand that the methods provided in the embodiments of the present disclosure may be executed alone, or may be executed together with some methods in the embodiments of the present disclosure or some methods in related technologies.

As shown in FIG. 15, an admission control method is provided in an embodiment of the present disclosure. The method is performed by a first base station. The method includes a step as follows.

In step 151, the coordinated admission control information is sent to the terminal.

Here, the coordinated admission control information sent by the first base station may be received before the terminal sends the coordinated admission control information to the first base station. In this way, the terminal may determine the coordinated admission control information that needs to be sent to the first base station.

In an embodiment, the first base station may send the coordinated admission control information to the terminal through a broadcast signaling or a dedicated signaling. Here, the coordinated admission control information may be sent to the terminal through an RRC reconfiguration message or an RRC release message.

It is to be noted that, those skilled in the art may understand that the methods provided in the embodiments of the present disclosure may be executed alone, or may be executed together with some methods in the embodiments of the present disclosure or some methods in related technologies.

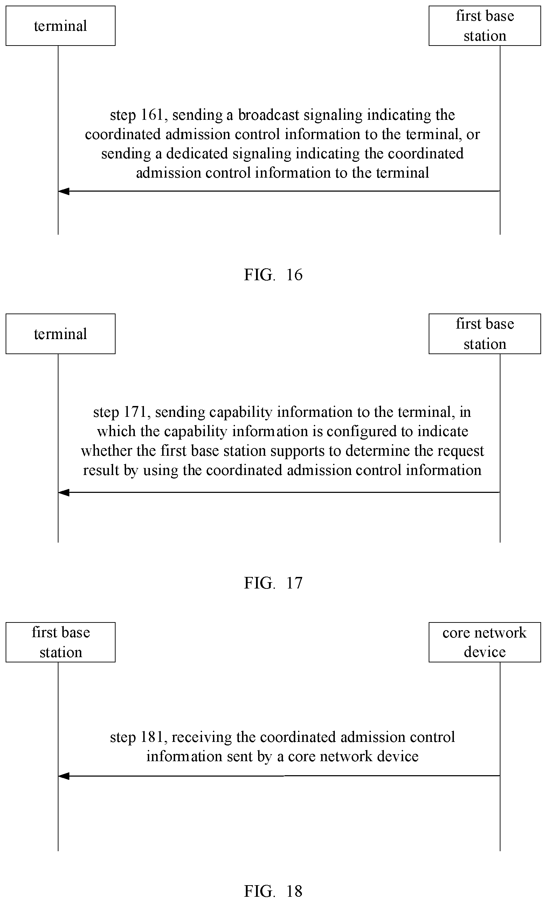

As shown in FIG. 16, an admission control method is provided in an embodiment of the present disclosure. The method is performed by a first base station. The method includes a step as follows.

In step 161, a broadcast signaling indicating the coordinated admission control information is sent to the terminal, or a dedicated signaling indicating the coordinated admission control information is sent to the terminal.

Here, the dedicated signaling may be an RRC reconfiguration message or an RRC release message.

It is to be noted that, those skilled in the art may understand that the methods provided in the embodiments of the present disclosure may be executed alone, or may be executed together with some methods in the embodiments of the present disclosure or some methods in related technologies.

As shown in FIG. 17, an admission control method is provided in an embodiment of the present disclosure. The method is performed by a first base station. The method includes a step as follows.

In step 171, capability information is sent to the terminal.

The capability information is configured to indicate whether the first base station supports to determine the request result by using the coordinated admission control information.

In an embodiment, the first base station sends the capability information to the terminal before the terminal sends the coordinated admission control information to the first base station. The capability information is configured to indicate whether the first base station supports to determine the request result by using the coordinated admission control information.

In an embodiment, in response to the first base station not supporting to determine the request result by using the coordinated admission control information, the terminal may not send the coordinated admission control information to the first base station. That is, the terminal cannot send the coordinated admission control information through the RRC connection request message or the resume request message. In response to the first base station supporting to determine the request result by using the coordinated admission control information, the terminal sends the coordinated admission control information to the first base station.

It is to be noted that, those skilled in the art may understand that the methods provided in the embodiments of the present disclosure may be executed alone, or may be executed together with some methods in the embodiments of the present disclosure or some methods in related technologies.

As shown in FIG. 18, an admission control method is provided in an embodiment of the present disclosure. The method is performed by a first base station. The method includes a step as follows.

In step 181, the coordinated admission control information sent by a core network device is received.

In an embodiment, the coordinated admission control information is carried in a service setup request message or a service modifying request message initiated by the core network device.

In an embodiment, the coordinated admission control information is carried in a PDN session setup request message or a service modifying request message, for example, a PDN session indicates a group to which the terminal belongs to.

In an embodiment, the coordinated admission control information is carried in a QoS flow setup information unit of a PDN session setup request message or a service modifying request message. Here, the coordinated admission control information may indicate a group to which the terminal belongs.

It is to be noted that, the service setup request message initiated by the core network may be one of a PDU session resource setup request message, a PDU session resource modifying request message, an initial context setup request.

In an embodiment, the coordinated admission control information is carried in the handover request message sent by the core network to the first base station.

In an embodiment, the coordinated admission control information is carried in a handover request message sent by the core network to the base station, for example, a certain PDN session indicates a group to which the terminal belongs to.

It is to be noted that, those skilled in the art may understand that the methods provided in the embodiments of the present disclosure may be executed alone, or may be executed together with some methods in the embodiments of the present disclosure or some methods in related technologies.

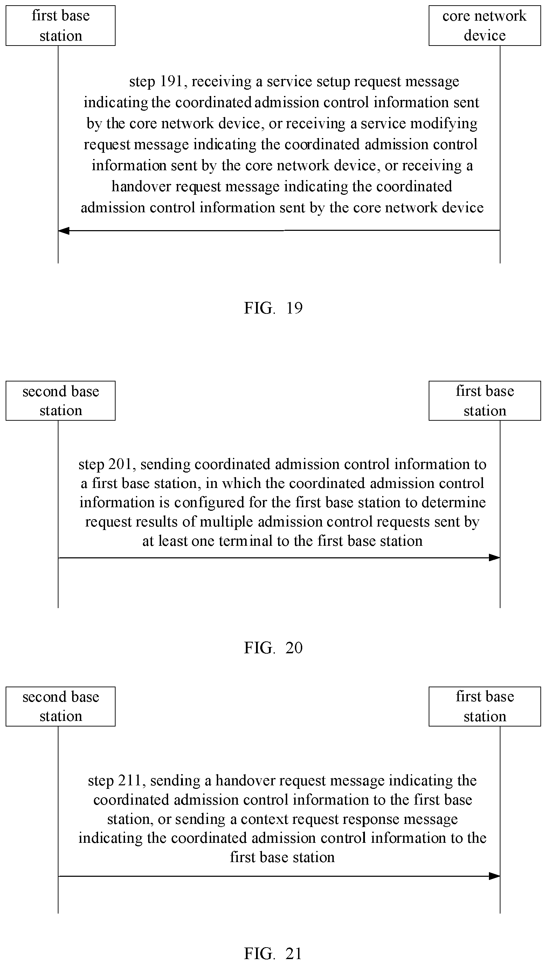

As shown in FIG. 19, an admission control method is provided in an embodiment of the present disclosure. The method is performed by a first base station. The method includes a step as follows.

In step 191, a service setup request message indicating the coordinated admission control information sent by the core network device is received, or a service modifying request message indicating the coordinated admission control information sent by the core network device is received, or a handover request message indicating the coordinated admission control information sent by the core network device is received.

It is to be noted that, those skilled in the art may understand that the methods provided in the embodiments of the present disclosure may be executed alone, or may be executed together with some methods in the embodiments of the present disclosure or some methods in related technologies.

As shown in FIG. 20, an admission control method is provided in an embodiment of the present disclosure. The method is performed by a second base station. The method includes a step as follows.

In step 201, coordinated admission control information is sent to a first base station. The coordinated admission control information is configured for the first base station to determine request results of multiple admission control requests sent by at least one terminal to the first base station.

Specifically, reference may be made to the descriptions in steps 9 and 13, which will not be elaborated herein.

It is to be noted that, those skilled in the art may understand that the methods provided in the embodiments of the present disclosure may be executed alone, or may be executed together with some methods in the embodiments of the present disclosure or some methods in related technologies.

In an embodiment, the coordinated admission control information is configured for the first base station to determine request results of multiple admission control requests sent by at least one terminal in a group to the first base station.

Here, the at least one terminal is included in the group. The at least one terminal is configured for collecting multimodal information. For example, the group includes a first terminal, a second terminal, and a third terminal. The first terminal is configured to collect video information, the second terminal is configured to collect audio information, and the third terminal is configured to collect fingerprint information. Here, the group may be indicated by a group identifier, and the terminal may determine a group to which the terminal belongs according to the group identifier.

In an embodiment, the coordinated admission control information includes group information, for example, a group identifier. Here, the group information is configured to indicate a group to which the terminal sending the coordinated admission control information belongs. Each group includes at least one terminal. The group to which the terminal belongs may be determined based on the group identifier. In an embodiment, the first base station receives multiple admission control requests sent by at least one terminal in a group indicated by the group identifier. In response to the first base station rejecting one of the multiple admission control requests, all of the multiple admission control requests will be rejected. Alternatively, in response to the first base station accepting one of the multiple admission control requests, all of the multiple admission control requests will be accepted. Here, terminals included in a group may be predetermined. Here, the terminal within the group may be a terminal that acquires the multimode information.

In an embodiment, a group identifier is configured to indicate a group to which the terminal belongs or a group to which a service of the terminal belongs. Demand indication information is configured to indicate that the terminal has a demand for a coordinated admission control or the terminal does not have a demand for a coordinated admission control. Behavior indication information is configured to indicate a way for the first base station to coordinately determine a request result based on a result of at least one admission control request when the terminal has a demand for the coordinated admission control.

Here, the group identifier may be configured to indicate the group to which the terminal sending the coordinated admission control information belongs. The group identifier may also be configured to indicate the group to which the service of the terminal sending the coordinated admission control belongs.

In an embodiment, an information field is configured to indicate the demand indication information. For example, when a value of the information field is "1," it indicates that the terminal has the demand for the coordinated admission control. Alternatively, when a value of the information field is "0," it indicates that the terminal does not have the demand for the coordinated admission control.

In an embodiment, the demand indication information may be carried in an implicit indication manner. For example, when the coordinated admission control information carries the group identifier, the demand indication information indicates that the terminal has the demand for the coordinated admission control. Alternatively, when the coordinated admission control information does not carry the group identifier, the demand indication information indicates that the terminal does not have the demand for the coordinated admission control.

In an embodiment, in response to the terminal having the demand for the coordinated admission control, when one of the multiple admission control requests is rejected, the multiple admission control requests are rejected. Alternatively, when one of the multiple admission control requests is accepted, the multiple admission control requests are accepted. Here, it is to be noted that the terminals sending the admission control requests belong to one group, or the services of the multiple admission control requests belong to one group.

It is to be noted that, it may also be determined to receive the multiple admission control requests simultaneously or to reject the multiple admission control requests based on a predetermined protocol.

As shown in FIG. 21, an admission control method is provided in an embodiment of the present disclosure. The method is performed by a second base station. The method includes a step as follows.

In step 211, a handover request message indicating the coordinated admission control information is sent to the first base station, or a context request response message indicating the coordinated admission control information is sent to the first base station.

Specifically, reference may be made to the descriptions in step 13, which will not be elaborated herein.

It is to be noted that, those skilled in the art may understand that the methods provided in the embodiments of the present disclosure may be executed alone, or may be executed together with some methods in the embodiments of the present disclosure or some methods in related technologies.

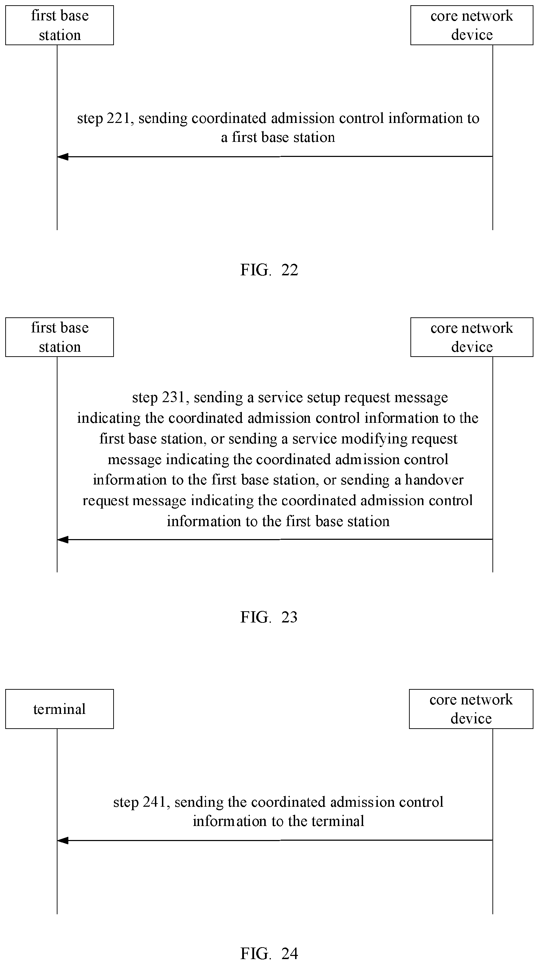

As shown in FIG. 22, an admission control method is provided in an embodiment of the present disclosure. The method is performed by a core network device. The method includes a step as follows.

In step 221, coordinated admission control information is sent to a first base station. The coordinated admission control information is configured for the first base station to determine request results of multiple admission control requests sent by at least one terminal to the first base station.

Specifically, reference may be made to the descriptions in steps 9 and 18, which will not be elaborated herein.

It is to be noted that, those skilled in the art may understand that the methods provided in the embodiments of the present disclosure may be executed alone, or may be executed together with some methods in the embodiments of the present disclosure or some methods in related technologies.

In an embodiment, the coordinated admission control information is configured for the first base station to determine request results of multiple admission control requests sent by at least one terminal in a group to the first base station.

Here, the at least one terminal is included in the group. The at least one terminal is configured for collecting multimodal information. For example, the group includes a first terminal, a second terminal, and a third terminal. The first terminal is configured to collect video information, the second terminal is configured to collect audio information, and the third terminal is configured to collect fingerprint information. Here, the group may be indicated by a group identifier, and the terminal may determine a group to which a terminal belongs according to the group identifier.

In an embodiment, the coordinated admission control information includes group information, for example, a group identifier. Here, the group information is configured to indicate a group to which the terminal sending the coordinated admission control information belongs. Each group includes at least one terminal. The group to which the terminal belongs may be determined based on the group identifier. In an embodiment, the first base station receives multiple admission control requests sent by at least one terminal in a group indicated by the group identifier. In response to the first base station rejecting one of the multiple admission control requests, all of the multiple admission control requests will be rejected. Alternatively, in response to the first base station accepting one of the multiple admission control requests, all of the multiple admission control requests will be accepted. Here, terminals included in a group may be predetermined. Here, the terminal within the group may be a terminal that acquires the multimode information.

In an embodiment, a group identifier is configured to indicate a group to which the terminal belongs or a group to which a service of the terminal belongs. Demand indication information is configured to indicate that the terminal has a demand for a coordinated admission control or the terminal does not have a demand for a coordinated admission control. Behavior indication information is configured to indicate a way for the first base station to coordinately determine a request result based on a result of at least one admission control request when the terminal has a demand for the coordinated admission control.

Here, the group identifier may be configured to indicate the group to which the terminal sending the coordinated admission control information belongs. The group identifier may also be configured to indicate the group to which the service of the terminal sending the coordinated admission control belongs.

In an embodiment, an information field is configured to indicate the demand indication information. For example, when a value of the information field is "1," it indicates that the terminal has the demand for the coordinated admission control. Alternatively, when a value of the information field is "0," it indicates that the terminal does not have the demand for the coordinated admission control.

In an embodiment, the demand indication information may be carried in an implicit indication manner. For example, when the coordinated admission control information carries the group identifier, the demand indication information indicates that the terminal has the demand for the coordinated admission control. Alternatively, when the coordinated admission control information does not carry the group identifier, the demand indication information indicates that the terminal does not have the demand for the coordinated admission control.

In an embodiment, in response to the terminal having the demand for the coordinated admission control, when one of the multiple admission control requests is rejected, the multiple admission control requests are rejected. Alternatively, when one of the multiple admission control requests is accepted, the multiple admission control requests are accepted. Here, it is to be noted that the terminals sending the admission control requests belong to one group, or the services of the multiple admission control requests belong to one group.

It is to be noted that, it may also be determined to receive the multiple admission control requests simultaneously or to reject the multiple admission control requests based on a predetermined protocol.

As shown in FIG. 23, an admission control method is provided in an embodiment of the present disclosure. The method is performed by a core network device. The method includes a step as follows.

In step 231, a service setup request message indicating the coordinated admission control information is sent to the first base station, or a service modifying request message indicating the coordinated admission control information is sent to the first base station, or a handover request message indicating the coordinated admission control information is sent to the first base station. In an embodiment, the coordinated admission control information is carried in the service setup request message or the service modifying request message initiated by the core network device.

In an embodiment, the coordinated admission control information is carried in a PDN session setup request message, or a PDN session modifying request message. For example, a certain PDN session indicates a group to which the terminal belongs.

It is to be noted that, the service setup request message initiated by the core network may be one of a PDU session resource setup request message, a PDU session resource modifying request message, an initial context setup request.

In an embodiment, the coordinated admission control information is carried in a handover request message sent by the core network to the first base station.

In an embodiment, the coordinated admission control information is carried in a handover request message sent by the core network to the base station. For example, a certain PDN session indicates a group to which the terminal belongs.

It is to be noted that, those skilled in the art may understand that the methods provided in the embodiments of the present disclosure may be executed alone, or may be executed together with some methods in the embodiments of the present disclosure or some methods in related technologies.

As shown in FIG. 24, an admission control method is provided in an embodiment of the present disclosure. The method is performed by a core network device. The method includes a step as follows.

In step 241, the coordinated admission control information is sent to the terminal.

Specifically, reference may be made to the descriptions in step 61, which will not be elaborated herein.

It is to be noted that, those skilled in the art may understand that the methods provided in the embodiments of the present disclosure may be executed alone, or may be executed together with some methods in the embodiments of the present disclosure or some methods in related technologies.

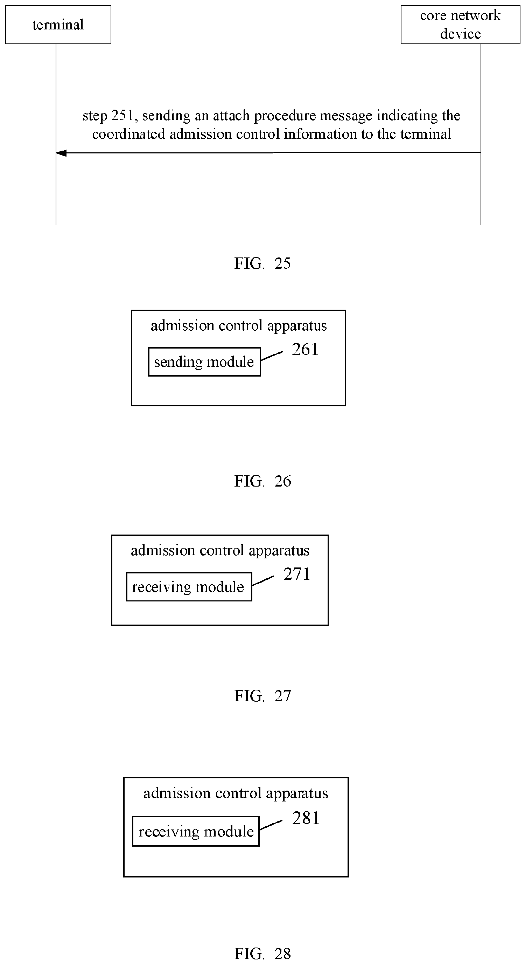

As shown in FIG. 25, an admission control method is provided in an embodiment of the present disclosure. The method is performed by a core network device. The method includes a step as follows.

In step 251, an attach procedure message indicating the coordinated admission control information is sent to the terminal.

It is to be noted that, those skilled in the art may understand that the methods provided in the embodiments of the present disclosure may be executed alone, or may be executed together with some methods in the embodiments of the present disclosure or some methods in related technologies.

In order to better understand the embodiment of the present disclosure, the technical solution of the present disclosure is further described through an illustrative embodiment below.

### Example 1:

1. For a newly added multimodal service application scenarios in a network, the processing of a coordinated admission control of a base station is added.
2. Based on 1, when an admission control request is sent to the base station, the admission control request may carry the following coordinated admission control information:
   A. A group identifier (ID). Here, the group identifier may also be referred to as a group parameter, and "the parameter" hereinafter may specifically refer to the "group identifier".

In an embodiment, the parameter is configured to indicate which group a terminal belongs to.

In an embodiment, the parameter is configured to indicate which group a specific service request of a certain terminal belongs to.

In an embodiment, the parameter implies an association relationship between the terminal and other terminals. In this way, it may be determined according to the parameter that the terminal and other terminals belong to a same group. In an embodiment, the parameter may indicate an implicit group relationship between the terminal and other terminals. In an embodiment, a terminal B declares that it is a backup relationship or a group relationship of a terminal A, which implicitly indicates that the terminal B and the terminal A are in a same group.

B. Information of whether there is a demand for a coordinated admission control.

In an embodiment, the parameter may be a value of a flag. For example, a value of "1" means that there is a demand for a coordinated admission control. For example, a value of "0" means there is no demand for a coordinated admission control.

In an embodiment, the information may be indicated in an implicit manner. For example, when the group ID is carried, a demand for a coordinated admission control is implicitly expressed.

C. How to carry out a behavior regulation of a coordinated admission control.

In an embodiment, for example, in case that a value in B) is that there is a demand for a coordinated admission control, the base station may make a unified decision on an operation when receiving the admission control request, for example. As long as one of the admission control requests fails, all the admission control requests of the group return a failure.

Alternatively, due to a protocol and an agreement, that is, there is a demand for a coordinated admission control, a behavior either all succeeds or all fails.

3. Based on 2, in a scenario embodiment, the coordinated admission control information is carried in an RRC connection or a resume request.

In an embodiment, the coordinated admission control information is carried in a third random access message (msg3).

In an embodiment, the coordinated admission control information is carried in IE in msg3.

In an embodiment, a new msg3 message may be adopted. The coordinated admission control information is carried in the IE.

In an embodiment, a new CCCH message may be adopted. The coordinated admission control information is carried in a logical channel ID of the CCCH. At this time, after receiving the CCCH message, the base station implicitly knows a group where the terminal is located according to a mapping relationship between the logical channel ID and the coordinated admission control information (here, the coordinated admission control information may be group information, such as the group identifier).

In an embodiment, the base station first notifies the terminal of a correspondence between the logical channel ID of the CCCH and a group. Reference is made to Table 1 for details. The mapping relationship may be notified through a broadcast signaling or a dedicated signaling.

In an embodiment, groups of different terminals may also be distinguished by the division of time-frequency code domain resources accessed by different random access channels (RACHs). At this time, the base station needs to notify the terminal of the division of time-frequency code domain resources for different RACH access and a correspondence between different terminal groups. When a RACH request of the terminal is received, a group in which the terminal is located may be determined based on the time-frequency code domain resources indicated by the RACH request.

In an embodiment, the base station receives the admission control request and the coordinated admission control information, and makes a decision.

For example, in case that both a first terminal and a second terminal belong to a group 1, the base station either admits both admission control requests of the two terminals successfully, or fails to admit both admission control requests of the two terminals. Alternatively, one succeeds and the other fails.

In an embodiment, a waiting timer in an RRC rejection response sent by the base station to the terminal may be configured according to the coordinated admission control information.

In an embodiment, a same waiting timer is sent to terminals in a same group (in case that time to send the rejection response to two users is simultaneous).

4. Based on 2, in a scenario embodiment, the coordinated admission control information may be forwarded by one base station to another base station.

In an embodiment, the coordinated admission control information is carried in a handover request message.

In an embodiment, the coordinated admission control information is carried in a PDN session setup IE in the handover request message. For example, a certain PDN session indicates which group it belongs to.

In an embodiment, the coordinated admission control information is carried in a Qos flow setup IE in the handover request message. For example, a certain Qos flow indicates which group it belongs to.

It is to be noted that, the coordinated admission control information may also be carried in a response from the receiving base station to a sending base station, such as time T, so as to facilitate the reference of a next request initiated by the sending base station.

In an embodiment, the coordinated admission control information is carried in a terminal for acquiring a context request response message.

In an embodiment, the coordinated admission control information is carried in a PDN session setup IE in a retrieve UE context response message. For example, a certain PDN session indicates which group it belongs to.

In an embodiment, the coordinated admission control information is carried in a Qos flow setup IE in a retrieve UE context response message. For example, a certain Qos flow indicates which group it belongs to.

5. Based on 2, in an embodiment, the coordinated admission control information may be forwarded by a core network to the base station.

In an embodiment, the coordinated admission control information is carried in a service setup/modifying request initiated by the core network.

In an embodiment, the coordinated admission control information is carried in a PDN session setup/modifying request message. For example, a certain a PDN session indicates which group it belongs to.

In an embodiment, the coordinated admission control information is carried in a Qos flow setup IE in a PDN session setup request message or a PDN session modifying request message. For example, a certain Qos flow indicates which group it belongs to.

In an embodiment, the core network notifies the base station that the terminals are in a mutual backup relationship and belong to a group. For example, the terminal A and the terminal B are in a mutual backup relationship and belong to a same group.

It is to be noted that, the service setup request message initiated by the core network may be one of a PDU session resource setup request message, a PDU session resource modifying request message, an initial context setup request.

In an embodiment, the coordinated admission control information is carried in a handover request message sent by the core network to the base station.

In an embodiment, the coordinated admission control information is carried in a handover request message sent by the core network to the base station. For example, a certain PDN session indicates which group it belongs to.

It is to be noted that, network congestion information may also be carried in a response of the base station to the core network, such as time T, so as to facilitate the reference of a next request initiated by the core network.

6. Based on 1, the coordinated admission control information may be notified by the base station or the core network to the terminal.
a. A manner in which the core network notifies the terminal may be acquired by the terminal when performing an attach procedure.

In an embodiment, a manner in which the core network notifies the terminal may be that the terminal notifies the terminal of group information to which the terminal belongs when performing the attach procedure (the terminal may notify the base station when it is convenient for a connection request).

In an example, a NAS (stratum) of the terminal may notify an AS (stratum) of the group information to which the terminal belongs through an inter-stratum message to perform a service setup request.
b. The base station notifies the terminal may be to notify the terminal through a broadcast signaling or a dedicated signaling.

In an embodiment, the base station notifies the terminal of the group information to which the terminal belongs through a reconfiguration message or a release message.

7. Based on 1, the processing of whether the base station supports the coordinated admission control may notify the terminal through a broadcast message or a dedicated message.

In an embodiment, the terminal is allowed to perform an operation in 3) merely after the base station notifies the terminal that it has this function (that is, in case that the base station does not have this capability, the terminal cannot carry the coordinated admission control information in the RRC connection or the resume request).

As shown in FIG. 26, an admission control apparatus is provided in an embodiment of the present disclosure. The apparatus includes a sending module 261 configured to send coordinated admission control information to a first base station.

The coordinated admission control information is configured for the first base station to determine request results of multiple admission control requests sent by at least one terminal to the first base station.

It is to be noted that, those skilled in the art may understand that the methods provided in the embodiments of the present disclosure may be executed alone, or may be executed together with some methods in the embodiments of the present disclosure or some methods in related technologies.

As shown in FIG. 27, an admission control apparatus is provided in an embodiment of the present disclosure. The apparatus includes a receiving module 271 configured to receive coordinated admission control information, and a determining module configured to determine request results of multiple admission control requests sent by at least one terminal to the first base station according to the coordinated admission control information.

It is to be noted that, those skilled in the art may understand that the methods provided in the embodiments of the present disclosure may be executed alone, or may be executed together with some methods in the embodiments of the present disclosure or some methods in related technologies.

As shown in FIG. 28, an admission control apparatus is provided in an embodiment of the present disclosure. The apparatus includes a receiving module 281, configured to send coordinated admission control information to a first base station.

The coordinated admission control information is configured for the first base station to determine request results of multiple admission control requests sent by at least one terminal to the first base station.

It is to be noted that, those skilled in the art may understand that the methods provided in the embodiments of the present disclosure may be executed alone, or may be executed together with some methods in the embodiments of the present disclosure or some methods in related technologies.

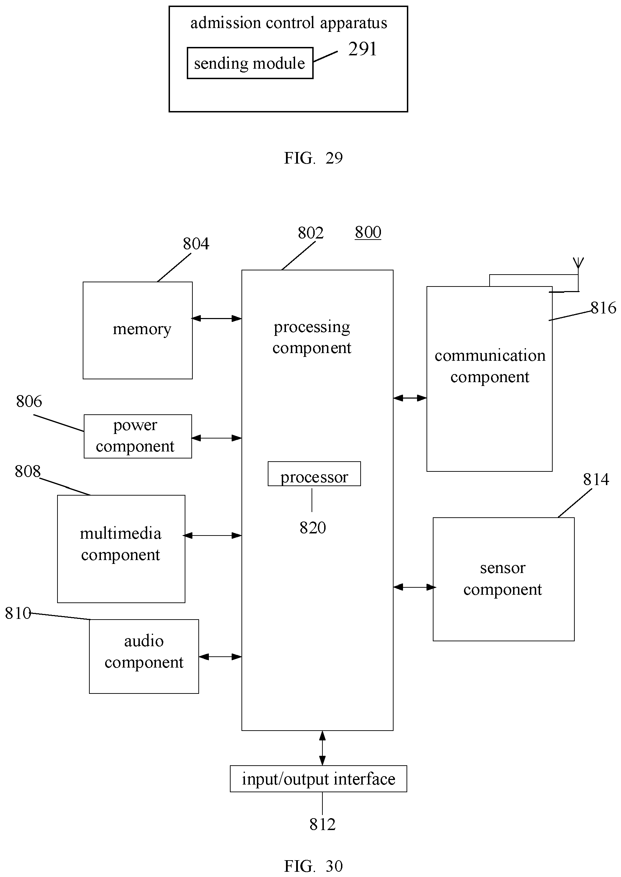

As shown in FIG. 29, an admission control apparatus is provided in an embodiment of the present disclosure. The apparatus includes a sending module 291 configured to send coordinated admission control information to a first base station.

The coordinated admission control information is configured for the first base station to determine request results of multiple admission control requests sent by at least one terminal to the first base station.

It is to be noted that, those skilled in the art may understand that the methods provided in the embodiments of the present disclosure may be executed alone, or may be executed together with some methods in the embodiments of the present disclosure or some methods in related technologies.

An embodiment of the present disclosure provides a communication device. The communication device includes a processor, and a memory for storing instructions executable by the processor. The processor is configured to implement the method of any one of embodiments of the present disclosure when running the executable instructions.

The processor may include various types of storage media, which are non-temporary computer storage media that may continue to memorize information stored thereon after the communication device is powered down.

The processor may be connected with the memory via a bus or the like for reading executable program stored in the memory.

An embodiment of the present disclosure also provides a computer storage medium. The computer storage medium has stored therein computer-executable programs that, when executed by a processor, cause the method of any one of embodiments of the present disclosure to be implemented.

With respect to the apparatus in the above-mentioned embodiment, the specific manners for performing operations for individual modules therein have been described in detail in the embodiments regarding the method, which will not be elaborated herein.

As shown in FIG. 30, an embodiment of the present disclosure provides a structure of a terminal.

Referring to a terminal 800 shown in FIG. 30, an embodiment of the present disclosure provides the terminal 800. The terminal 800 specifically may be a mobile phone, a computer, a digital broadcast terminal, a messaging device, a game console, a tablet device, a medical device, a fitness device, a personal digital assistant, or the like.

Referring to FIG. 30, the terminal 800 may include one or more of a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, phone calls, data communications, camera operations, and recording operations. The processing component 802 can include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 808 includes a front camera and/or a rear camera. The front camera and/or the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the terminal 800 and other devices. The terminal 800 can access a wireless network based on a communication standard, such as Wi-Fi, 2G, or 3G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the terminal 800 may be implemented with one or more of an application specific integrated circuit (ASIC), a digital signal processor (DSP), a digital signal processing device (DSPD), a programmable logic device (PLD), a field programmable gate array (FPGA), a controller, a micro-controller, a microprocessor, or other electronic elements, for performing the above-mentioned methods.

In an illustrative embodiment, there is also provided a non-transitory computer readable storage medium including instructions, such as included in the memory 804, executable by the processor 820 in the terminal 800, for completing the above-mentioned methods. For example, the non-transitory computer-readable storage medium may be a ROM, a random access memory (RAM), a CD-ROM, a magnetic tape, a floppy disc, an optical data storage device, and the like.

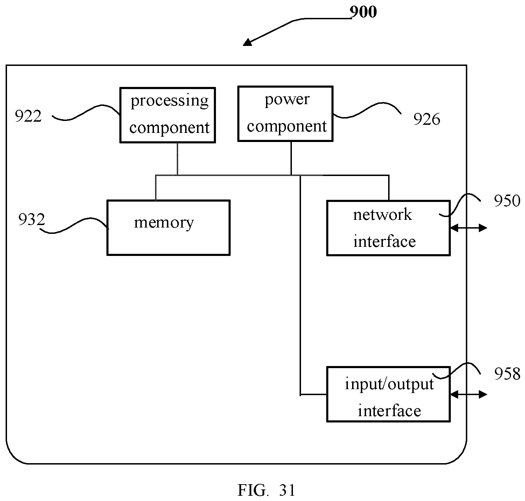

As shown in FIG. 31, an embodiment of the present disclosure shows a structure of a base station. For example, a base station 900 may be provided as a network side device. Referring to FIG. 31, the base station 900 includes a processing component 922, which further includes one or more processors, and memory resources represented by a memory 932 for storing instructions executable by the processing component 922, such as an application program. The application program stored in the memory 932 may include one or more modules each corresponding to a set of instructions. In addition, the processing component 922 is configured to execute instructions to perform any of the above-mentioned methods performed by the base station.

The network device 900 may further include a power component 926 configured to perform power management of the network device 900, a wired or wireless network interface 950 configured to connect the network device 900 to a network, and an input/output (I/O) interface 958. The network device 900 may operate based on an operating system stored in the memory 932, such as Windows Server^{™}, Mac OS X^{™}, Unix^{™}, Linux^{™}, FreeBSD^{™} or the like.

Other embodiments of the disclosure will be apparent to those skilled in the art from consideration of the specification and practice of the disclosure disclosed here. The present disclosure is intended to cover any variations, uses, or adaptations of the disclosure following the general principles thereof and including such departures from the present disclosure as come within known or customary practice in the art. It is intended that the specification and examples be considered as illustrative only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. An admission control method, performed by a terminal, comprising:
sending coordinated admission control information to a first base station;
wherein the coordinated admission control information is configured for the first base station to determine request results of multiple admission control requests sent by at least one terminal to the first base station.

2. The method of claim 1, wherein the coordinated admission control information is configured for the first base station to determine request results of multiple admission control requests sent by at least one terminal in a group to the first base station.

3. The method of claim 1, wherein the coordinated admission control information comprises one or more of:
a group identifier configured to indicate a group to which the terminal belongs or a group to which a service of the terminal belongs;
demand indication information configured to indicate that the terminal has a demand for a coordinated admission control or the terminal does not have a demand for a coordinated admission control;
behavior indication information configured to indicate a way for the first base station to coordinately determine a request result based on a result of at least one admission control request when the terminal has a demand for the coordinated admission control.

4. The method of claim 1, wherein sending the coordinated admission control information to the first base station comprises:
sending a radio resource control (RRC) connection request message indicating the coordinated admission control information to the first base station; or
sending an RRC resume request message indicating the coordinated admission control information to the first base station.

5. The method of claim 1, further comprising:
receiving an RRC rejection response message sent by the first base station;
wherein waiting timer information indicated by the RRC rejection response message is configured according to the coordinated admission control information.

6. The method of claim 5, wherein the waiting timer information of terminals in a same group is the same.

7. The method of claim 1, further comprising:
receiving the coordinated admission control information.

8. The method of claim 7, wherein receiving the coordinated admission control information comprises:
receiving an attach procedure message indicating the coordinated admission control information sent by a core network device; or
receiving a broadcast signaling indicating the coordinated admission control information sent by the first base station; or
receiving a dedicated signaling indicating the coordinated admission control information sent by the first base station.

9. The method of claim 1, further comprising:
receiving capability information sent by the first base station;
wherein the capability information is configured to indicate whether the first base station supports to determine the request results by using the coordinated admission control information.

10. An admission control method, performed by a first base station, comprising:
receiving coordinated admission control information; and
determining request results of multiple admission control requests sent by at least one terminal to the first base station according to the coordinated admission control information.

11. The method of claim 10, wherein the coordinated admission control information is configured for the first base station to determine request results of multiple admission control requests sent by at least one terminal in a group to the first base station.

12. The method of claim 10, wherein the coordinated admission control information comprises one or more of:
a group identifier configured to indicate a group to which the terminal belongs or a group to which a service of the terminal belongs;
demand indication information configured to indicate that the terminal has a demand for a coordinated admission control or the terminal does not have a demand for a coordinated admission control;
behavior indication information configured to indicate a way for the first base station to coordinately determine a request result based on a result of at least one admission control request when the terminal has a demand for the coordinated admission control.

13. The method of claim 10, wherein receiving the coordinated admission control information comprises:
receiving the coordinated admission control information sent by the terminal.

14. The method of claim 13, wherein receiving the coordinated admission control information sent by the terminal comprises:
receiving a radio resource control (RRC) connection request message indicating the coordinated admission control information sent by the terminal; or
receiving an RRC resume request message indicating the coordinated admission control information sent by the terminal.

15. The method of claim 10, further comprising:
sending an RRC rejection response message to the terminal;
wherein waiting timer information indicated by the RRC rejection response message is configured according to the coordinated admission control information.

16. The method of claim 15, wherein the waiting timer information of terminals in a same group is the same.

17. The method of claim 10, wherein receiving the coordinated admission control information comprises:
receiving the coordinated admission control information sent by a second base station.

18. The method of claim 17, wherein receiving the coordinated admission control information sent by the second base station comprises:
receiving a handover request message indicating the coordinated admission control information sent by the second base station; or
receiving a context request response message indicating the coordinated admission control information sent by the second base station.

19. The method of claim 10, further comprising:
sending the coordinated admission control information to the terminal.

20. The method of claim 19, wherein sending the coordinated admission control information to the terminal comprises:
sending a broadcast signaling indicating the coordinated admission control information to the terminal; or
sending a dedicated signaling indicating the coordinated admission control information to the terminal.

21. The method of claim 10, further comprising:
sending capability information to the terminal;
wherein the capability information is configured to indicate whether the first base station supports to determine the request results by using the coordinated admission control information.

22. The method of claim 10, wherein receiving the coordinated admission control information comprises:
receiving the coordinated admission control information sent by a core network device.

23. The method of claim 22, wherein receiving the coordinated admission control information sent by the core network device comprises:
receiving a service setup request message indicating the coordinated admission control information sent by the core network device; or
receiving a service modifying request message indicating the coordinated admission control information sent by the core network device; or
receiving a handover request message indicating the coordinated admission control information sent by the core network device.

24. An admission control method, performed by a second base station, comprising:
sending coordinated admission control information to a first base station;
wherein the coordinated admission control information is configured for the first base station to determine request results of multiple admission control requests sent by at least one terminal to the first base station.

25. The method of claim 24, wherein the coordinated admission control information is configured for the first base station to determine request results of multiple admission control requests sent by at least one terminal in a group to the first base station.

26. The method of claim 24, wherein the coordinated admission control information comprises one or more of:
a group identifier configured to indicate a group to which the terminal belongs or a group to which a service of the terminal belongs;
demand indication information configured to indicate that the terminal has a demand for a coordinated admission control or the terminal does not have a demand for a coordinated admission control;
behavior indication information configured to indicate a way for the first base station to coordinately determine a request result based on a result of at least one admission control request when the terminal has a demand for the coordinated admission control.

27. The method of claim 25, wherein sending the coordinated admission control information to the first base station comprises:
sending a handover request message indicating the coordinated admission control information to the first base station; or
sending a context request response message indicating the coordinated admission control information to the first base station.

28. An admission control method, performed by a core network device, comprising:
sending coordinated admission control information to a first base station;
wherein the coordinated admission control information is configured for the first base station to determine request results of multiple admission control requests sent by at least one terminal to the first base station.

29. The method of claim 28, wherein the coordinated admission control information is configured for the first base station to determine request results of multiple admission control requests sent by at least one terminal in a group to the first base station.

30. The method of claim 28, wherein the coordinated admission control information comprises one or more of:
a group identifier configured to indicate a group to which the terminal belongs or a group to which a service of the terminal belongs;
demand indication information configured to indicate that the terminal has a demand for a coordinated admission control or the terminal does not have a demand for a coordinated admission control;
behavior indication information configured to indicate a way for the first base station to coordinately determine a request result based on a result of at least one admission control request when the terminal has a demand for the coordinated admission control.

31. The method of claim 28, wherein sending the coordinated admission control information to the first base station comprises:
sending a service setup request message indicating the coordinated admission control information to the first base station; or
sending a service modifying request message indicating the coordinated admission control information to the first base station; or
sending a handover request message indicating the coordinated admission control information to the first base station.

32. The method of claim 28, further comprising:
sending the coordinated admission control information to the terminal.

33. The method of claim 32, wherein sending the coordinated admission control information to the terminal comprises:
sending an attach procedure message indicating the coordinated admission control information to the terminal.

34. An admission control apparatus, comprising:
a sending module configured to send coordinated admission control information to a first base station;
wherein the coordinated admission control information is configured for the first base station to determine request results of multiple admission control requests sent by at least one terminal to the first base station.

35. An admission control apparatus, comprising:
a receiving module configured to receive coordinated admission control information; and
a determining module configured to determine request results of multiple admission control requests sent by at least one terminal to the first base station according to the coordinated admission control information.

36. An admission control apparatus, comprising:
a receiving module configured to send coordinated admission control information to a first base station;
wherein the coordinated admission control information is configured for the first base station to determine request results of multiple admission control requests sent by at least one terminal to the first base station.

37. An admission control apparatus, comprising:
a sending module configured to send coordinated admission control information to a first base station;
wherein the coordinated admission control information is configured for the first base station to determine request results of multiple admission control requests sent by at least one terminal to the first base station.

38. A communication device, comprising:
a memory; and
a processor connected to the memory, and configured to execute computer-executable instructions stored in the memory and capable of implementing the method of any one of claims 1 to 9, 10 to 23, 24 to 27, or 28 to 33.

39. A computer storage medium having stored therein computer-executable instructions that, after executed by a processor, cause the method of any one of claims 1 to 9, 10 to 23, 24 to 27, or 28 to 33 to be implemented.
